# EUROPEAN PATENT APPLICATION

(11) **EP 4 764 583 A1**
(43) Date of publication of application: **24.06.2026**
(21) Application number: 24221833.7
(22) Date of filing: 19.12.2024
(51) Int. Cl.: G01S 3/02, G01S 1/02

(54) **CALIBRATION METHOD AND CALIBRATION SYSTEM FOR CALIBRATING A DIRECTION FINDING DEVICE**

(71) Applicant: Rohde & Schwarz GmbH & Co. KG, 81671 München (DE)
(72) Inventor: Link, Jan, 81671 München (DE)
(74) Representative: Prinz & Partner mbB

(57) **Abstract**

A calibration method of calibrating a direction finding, DF, device (12) is described. The calibration method comprises the steps of
- positioning a mobile test device (14) at a first position relative to the DF device (12) to be calibrated, wherein the mobile test device (14) comprises a GNSS module (24) and a transmission module (26);
- obtaining, by an analysis module (22), the GNSS position of the mobile test device (14);
- generating and transmitting, by the transmission module (26), a wireless test signal;
- receiving, by the DF device (12) to be calibrated, the wireless test signal;
- determining, by the DF device (12), a DF heading based on the wireless test signal; and
- determining, by the analysis module (22), an error angle based on the DF heading and based on the GNSS position obtained.

Further, a calibration system (10) is described.

## Description

The present invention generally relates to a calibration method of calibrating a direction finding, DF, device. The present invention further relates to a calibration system for calibrating a DF device.

Direction finding devices that are configured to determine a DF heading of incoming radio frequency signals are employed in a plurality of different applications.

Like other electronic measurement systems, it is necessary to calibrate the DF devices in order to ensure correct functionality of the DF devices.

For example, a known signal source can be deployed to a predefined location, where the known signal source generates a test signal that is used to calibrate the respective DF device.

However, due to the typically required large distances of the signal source to the DF device, calibrating the DF device is rather involved and time consuming.

The object of the present invention is to provide a calibration method and a calibration system for calibrating a DF device that are easier to operate and require reduced time for performing the calibration.

According to the present invention, the problem is solved by a calibration method of calibrating a direction finding, DF, device. The calibration method comprises the steps of
- positioning a mobile test device at a first position relative to the DF device to be calibrated, wherein the mobile test device comprises a GNSS module and a transmission module, wherein the GNSS module is configured to determine a GNSS position of the mobile test device, and wherein the transmission module is configured to generate and transmit a wireless test signal;
- obtaining, by an analysis module, the GNSS position of the mobile test device;
- generating and transmitting, by the transmission module, a wireless test signal;
- receiving, by the DF device to be calibrated, the wireless test signal;
- determining, by the DF device, a DF heading based on the wireless test signal; and
- determining, by the analysis module, an error angle based on the DF heading and based on the GNSS position obtained.

Therein and hereinafter, the term "module" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

Further, the term "DF heading" is understood to denote an angle between a predefined reference direction and the direction from which the wireless test signal is received by the DF device. For example, the predefined reference direction may be north, particularly true north or magnetic north.

Moreover, the term "mobile test device" is understood to denote a test device that is mobile rather than stationary. In other words, the mobile test device is capable of moving between different positions, wherein the mobile test device is powered by an engine.

Accordingly, test devices that have to be carried or moved to another position by a human or by another device do not fall under the definition of a "mobile test device" according to the present disclosure.

The calibration method according to the present invention is based on the idea to generate the wireless test signal for calibrating the DF device by means of at least one mobile test device.

The mobile test device allows to perform the measurements for the calibration described above in a particularly easy and fast manner, as the position at which the wireless test signal is generated can easily be adapted by changing the position of the mobile test device. In fact, this allows to perform a plurality of measurements at different positions in a particularly fast manner.

For example, an operator may control the mobile test device to move to the appropriate position(s) for performing the calibration, namely at least to the first position.

Alternatively or additionally, the mobile test device may be automatically controlled to move to the appropriate position(s) for performing the calibration, namely at least to the first position.

The error angle determined by the analysis module corresponds to an error made by the DF device during determining the DF heading. Based on the error angle determined, the DF device can be calibrated by appropriately adapting operational parameters of the DF device.

According to an aspect of the present invention, the mobile test device is a flying device, particularly an unmanned aerial vehicle. Using a flying device, particularly an UAV, allows to adapt the position(s) for performing the calibration in a particularly fast manner.

Moreover, flying devices such as UAVs can be used in otherwise rather difficult environments, such as mountains or otherwise impassable terrain.

As an additional advantage, the flying device can be positioned such that a transmission path between the flying device and the DF device is free of obstacles, even if there are a plurality of obstacles on the ground. Accordingly, a maximal signal strength of the wireless test signal is ensured at the DF device.

Moreover, UAVs are relatively cheap. As the steps described above and hereinafter can be performed with (modified) off-the-shelf UAVs, this reduces the costs of performing the calibration of the DF device considerably.

It is noted that such flying devices, particularly UAVs, may colloquially also be called "drones".

In an exemplary embodiment of the present invention, the mobile test device is controllable by a remote control. Thus, positioning of the mobile test device is facilitated, as the mobile test device can be controlled from a distance.

In fact, the remote control may be operated by a human operator.

Alternatively or additionally, the remote control may be automatically operated by a control module, such that the mobile test device is controlled by the control module.

According to another aspect of the present invention, the GNSS position of the mobile test device is obtained by decoding signals exchanged between the mobile test device and the remote control. The data exchanged between mobile test devices such as UAVs typically comprises the GNSS position determined by the GNSS module of the mobile test device. Thus, by decoding the signals exchange between the mobile test device and the remote control, the GNSS position of the mobile test device can be determined.

It is noted that decoding the signals exchanged between the mobile test device and the remote control may also be called "remote decoding".

In a further exemplary embodiment of the present invention, the GNSS position of the mobile test device is obtained based on telemetry data of the mobile test device. The telemetry data obtained by the mobile test device typically comprises, among other data, the GNSS position obtained by the GNSS module of the mobile test device. Thus, the GNSS position of the mobile test device can be retrieved based on the telemetry data.

The telemetry data may be transmitted by the mobile test device to a remote control controlling the mobile test device. Thus, the GNSS position of the mobile test device can be obtained by decoding a corresponding downlink signal, as described above.

However, it is also conceivable that the mobile test device is configured to transmit the telemetry data to the analysis module directly.

A further aspect of the present invention provides that the error angle is determined for at least two different frequencies of the wireless test signal. It has turned out that the influence of reflections on the measurements performed can be minimized by determining the error angle for the at least two different frequencies.

In fact, the at least two different frequencies may be located in at least two different frequency bands, for example in the frequency band around 2.4 GHz and in the frequency band around 5.8 GHz.

However, it is to be understood that any other suitable frequencies may be used, for example in a frequency band between 0 Hz and 433 MHz, in a frequency band between 433 MHz and 2.4 GHz, in a frequency band between 2.4 GHz and 5.8 GHz, or in a frequency band above 5.8 GHz.

Error angles obtained at the at least two different frequencies may be averaged, thereby obtaining a frequency-averaged error angle. By averaging over the error angles obtained at the at least two different frequencies, the impact of environmental influences such as reflections as well as the influence of statistical errors is reduced.

Accordingly, the DF device may be calibrated based on the frequency-averaged error angle with enhanced accuracy.

According to an aspect of the present invention, the error angle is determined for at least a second position of the mobile test device. Particularly, a heading between the DF device and the mobile test device may be different for the first position and the second position, i.e. the corresponding wireless test signals reach the DF device under different angles. Determining the error angle for a plurality of different positions of the mobile test device allows for a precise calibration of the DF device over a certain angle range.

For example, the plurality of positions of the mobile test device may be chosen such that an operational angle range of the DF device is at least partially covered, particularly fully covered.

More precisely, the error angle may vary over different reception directions, i.e. over different angles of arrival of the wireless test signal. Determining the error angle for these different directions allows for a particularly precise calibration of the DF device over an angle range covered by the different angles of arrival.

The error angles obtained at the first position and at least at the second position may be averaged, thereby obtaining a position-averaged error angle. By averaging over the error angles obtained at the at least two different positions, the impact of environmental influences such as reflections as well as the influence of statistical errors is reduced.

Accordingly, the DF device may be calibrated based on the position-averaged error angle with enhanced accuracy.

A further aspect of the present invention provides that measurements at different positions are performed via at least two different mobile test devices. As more than one mobile test device is provided, the number of times that the mobile test devices have to be relocated for performing the calibration measurements is reduced. In fact, a calibration measurement can be performed by one of the mobile test devices while the other mobile test device(s) is (are) relocated. Thus, the time necessary for performing the calibration of the DF device is reduced substantially.

In an exemplary embodiment of the present invention, the error angle is determined for a plurality of different frequencies and/or for a plurality of different positions until at least one statistical criterion is fulfilled. In general, the statistical criterion ensures that, after calibration, the DF device operates with a desired accuracy.

In fact, the at least one statistical criterion may relate to an error of a DF heading determined by the DF device after calibration. More precisely, the statistical criterion may ensure that the error of the DF heading determined by the DF device after calibration is smaller than a predefined error threshold.

A further aspect of the present invention provides that the step of obtaining the GNSS position of the mobile test device is performed at least partially in parallel to the steps of generating and transmitting the wireless test signal, receiving the wireless test signal, and determining the DF heading based on the wireless test signal. Thus, the time necessary for performing the calibration of the DF device is reduced, as the steps of the calibration are performed at least partially in parallel, i.e. at least partially simultaneously.

In fact, that the step of obtaining the GNSS position of the mobile test device may be performed simultaneously with the steps of generating and transmitting the wireless test signal, receiving the wireless test signal, and determining the DF heading based on the wireless test signal

In an exemplary embodiment of the present invention, the mobile test device is automatically positioned by a control module. In other words, the mobile test device is automatically controlled by the control module to move to the first position and, optionally, to further positions. Thus, the expertise required from an operator is reduced, as the operator does not have to position the mobile test device manually.

According to the present invention, the problem further is solved by a calibration system for calibrating a DF device. The calibration system comprises a mobile test device and an analysis module. The mobile test device comprises a GNSS module and a transmission module. The calibration system is configured to perform the method according to any one of the preceding claims.

Regarding the further advantages and properties of the calibration system, reference is made to the explanations given above with respect to the calibration method, which also hold for the calibration system and vice versa.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows a calibration system for calibrating a DF device according to the present invention;
- Figure 2 schematically shows a mobile test device of the calibration system of Figure 1 in more detail; and
- Figure 3 schematically shows a flow chart of a calibration method according to the present invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

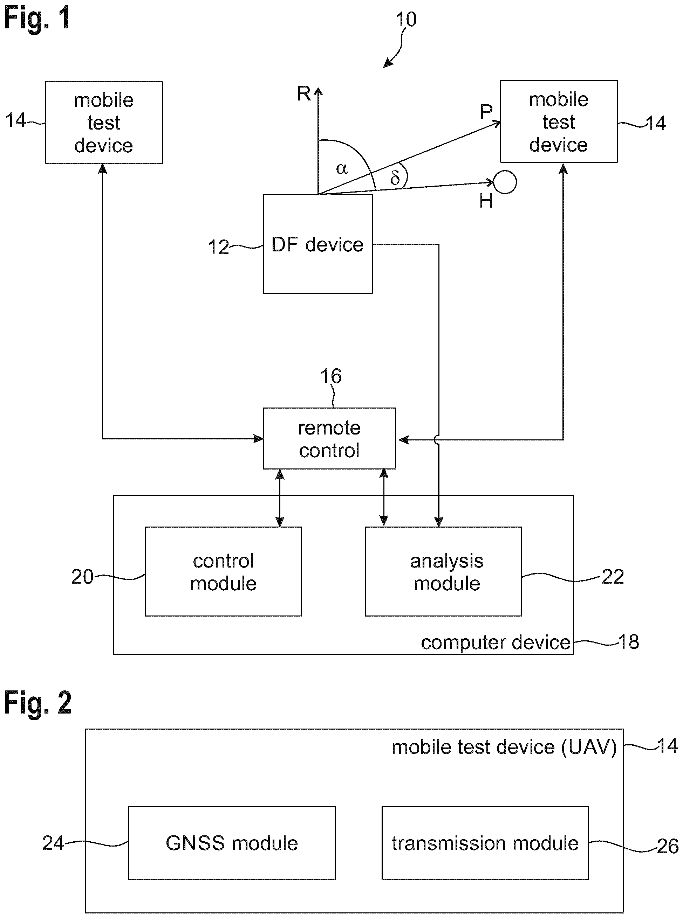

Figure 1 schematically shows a calibration system 10 for calibrating a direction finding (DF) device 12.

In general, the DF device 12 is configured to determine a DF heading of wireless radio frequency (RF) signals received by the DF device 12 relative to a predefined reference direction R.

For example, the predefined reference direction R is north, particularly true north or magnetic north.

In fact, the DF device 12 may comprise at least one RF antenna, particularly a plurality of RF antennas, as well as corresponding analysis circuitry being configured to determine the DF heading of the received RF signals.

For example, the DF device 12 may be a standalone device that is used for direction finding purposes and that may be deployed permanently or temporarily.

As another example, the DF device 12 may be integrated into a vehicle, such as a car, a plane, or a ship.

The calibration system 10 comprises at least one mobile test device 14.

For example, the at least one mobile test device 14 may be a flying device such as an unmanned aerial vehicle (UAV).

Without restriction of generality, the exemplary case of the at least one mobile test device 14 being an UAV is described hereinafter.

However, it is to be understood that the at least one mobile test device 14 may be established as any other suitable type of engine-powered mobile device.

Further, it is noted that in the exemplary embodiment shown in Figure 1, the calibration system 10 comprises two separate mobile test devices 14. However, it is to be understood that the calibration system 10 may comprise any other number of mobile test devices 14, for example one, three, four, etc.

The calibration system 10 further comprises a remote control 16 that is connected with the at least one mobile test device 14 in a signal-transmitting manner, namely via a wireless connection.

In general, the remote control 16 is configured to control the at least one mobile test device 14, as will be described in more detail below.

Further, while the remote control 16 is shown to be connected to both mobile test devices 14 in the exemplary embodiment shown in Figure 1, it is to be understood that separate remote controls may be provided for the different mobile test devices 14.

In the exemplary embodiment shown in Figure 1, the calibration system 10 further comprises a computer device 18 with a control module 20 and an analysis module 22.

For example, the computer device 18 may be a personal computer, a laptop, a notebook, a smart phone, a measurement instrument, or any other suitable type of smart device.

Moreover, it is to be understood that the control module 20 and/or the analysis module 22 may, alternatively, be integrated into the DF device 12.

The control module 20 is connected to the remote control 16 by a suitable wireless or wired connection.

The analysis module 22 is connected at least to the DF device 12 and, optionally, to the remote control 16 by a suitable wireless or wired connection.

Figure 2 shows one of the mobile test devices 14 in more detail.

The mobile test device 14 comprises a GNSS module 24 that is configured to obtain or rather determine a GNSS position of the mobile test device 14.

Further, the mobile test device 14 comprises a transmission module 26 that is configured to generate and transmit wireless test signals, as will be described in more detail below.

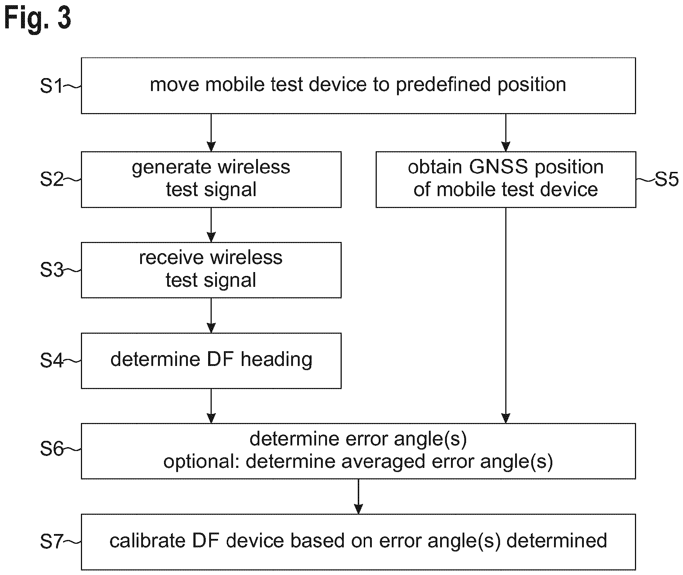

The calibration system 10 is configured to perform a calibration method of calibrating the DF device 12, which is described hereinafter with reference to Figure 3.

One of the mobile test devices 14 is positioned at a first position relative to the DF device 12 (step S1).

In fact, the mobile test device 14 is controlled by the remote control 16 to move to the first position.

Therein, the remote control 16 may be operated by a human operator.

Alternatively, the remote control 16 may be automatically operated by the control module 20, for example according to a predefined test plan that comprises instructions for calibrating the DF device 12.

A wireless test signal is generated by the transmission module 26 of the mobile test device 14, and the wireless test signal is transmitted to the DF device 12 (step S2).

In fact, the wireless test signal is generated within a predetermined frequency band, for example in a frequency band around 2.4 GHz or in a frequency band around 5.8 GHz.

However, it is to be understood that any other suitable frequency may be used, for example in a frequency band between 0 Hz and 433 MHz, in a frequency band between 433 MHz and 2.4 GHz, in a frequency band between 2.4 GHz and 5.8 GHz, or in a frequency band above 5.8 GHz.

The wireless test signal is received by the DF device 12 (step S3).

A DF heading is determined by the DF device 12 based on the wireless test signal received (step S4).

As is illustrated in Figure 1, the DF device 12 may determine a measured reception direction H from which the wireless test signal is presumably received.

The determined heading corresponds to an angle *α* between the predetermined reference direction R and the measured reception direction H.

As is further illustrated in Figure 1, the measured reception direction H may be different from an actual reception direction P.

The DF heading determined by the DF device 12 is transmitted to the analysis module 22.

A GNSS position of the mobile test device 14 is obtained by the analysis module 22 (step S5).

As data exchanged between the mobile test device 14 and the remote control 16, for example telemetry data of the mobile test device 14, typically comprises the GNSS position of the mobile test device 14, the analysis module 22 may decode signals exchanged between the mobile test device and the remote control 16.

More precisely, a downlink signal transmitted from the mobile test device 14 to the remote control 16 may be decoded by the analysis module 22 in order to obtain the GNSS position.

Therein, the signals exchanged between the mobile test device 14 and the remote control 16 may be intercepted by the analysis module 22.

Alternatively or additionally, the remote control 16 may forward the signals exchanged and/or the telemetry data to the analysis module 22.

Alternatively or additionally, the mobile test device 14 may transmit the telemetry data to the analysis module 22.

It is noted that step S5 may be performed at least partially in parallel to steps S2 to S4, i.e. at least partially simultaneously.

In fact, step S5 may be performed simultaneously to steps S2 to S4.

An error angle δ between the DF heading determined by the DF device 12 and an actual DF heading is determined by the analysis module 22 based on the on the DF heading received from the DF device 12 and based on the obtained GNSS position of the mobile test device 14 ( step S6).

As is illustrated in Figure 1, the error angle δ corresponds to an angle between the measured reception direction H and the actual reception direction P.

Therein, the analysis module 22 may determine the actual reception direction based on the obtained GNSS position, as the GNSS position corresponds to the actual position of the mobile test device 14.

Optionally, steps S2 to S6 may be repeated for at least one further frequency of the wireless test signal, wherein the at least one further frequency is different from the previously used frequency.

In other words, steps S2 to S6 are performed for at least two different frequencies.

For example, the at least two different frequencies may be located in at least two different frequency bands, for example in the frequency band around 2.4 GHz and in the frequency band around 5.8 GHz, or in any of the other frequency bands described above.

The error angles obtained at the at least two different frequencies may be averaged, thereby obtaining a frequency-averaged error angle.

Alternatively or additionally to using a plurality of different frequencies, steps S1 to S6 may be repeated for at least a second position of the mobile test device 14.

Therein, the same mobile test device 14 may be moved to the second position, and the calibration measurements described above may be conducted at the second position.

Alternatively, a different mobile test device 14 may be moved to the second position, and the calibration measurements described above may be conducted at the second position by the different mobile test device 14.

In fact, error angles may be obtained for a plurality of different positions of the mobile test device(s) 14.

The error angles obtained at the different positions of the mobile test device(s) 14 may be averaged, thereby obtaining a position-averaged error angle.

The DF device 12 is calibrated based on the error angle(s) determined (step S7).

In fact, the DF device 12 may be calibrated based on the individual error angles determined, based on the frequency-averaged error angle determined, and/or based on the position-averaged error angle determined.

The DF device 12 is calibrated by adapting operational parameters of the DF device 12 such that the error angle is reduced, particularly minimized.

The calibration may be performed in several iterations of steps S1 to S7 described above.

For example, steps S1 to S7 described above may be repeated until a certain statistical criterion is fulfilled.

For example, the statistical criterion relates to an error of the DF heading determined by the DF device 12 after calibration.

More precisely, the statistical criterion may relate to an error of the DF heading determined by the DF device 12 being smaller than a predefined error threshold.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A calibration method of calibrating a direction finding, DF, device (12), the calibration method comprising the steps of
- positioning a mobile test device (14) at a first position relative to the DF device (12) to be calibrated, wherein the mobile test device (14) comprises a GNSS module (24) and a transmission module (26), wherein the GNSS module (24) is configured to determine a GNSS position of the mobile test device (14), and wherein the transmission module (26) is configured to generate and transmit a wireless test signal;
- obtaining, by an analysis module (22), the GNSS position of the mobile test device (14);
- generating and transmitting, by the transmission module (26), a wireless test signal;
- receiving, by the DF device (12) to be calibrated, the wireless test signal;
- determining, by the DF device (12), a DF heading based on the wireless test signal; and
- determining, by the analysis module (22), an error angle based on the DF heading and based on the GNSS position obtained.

2. The calibration method of claim 1, wherein the mobile test device (14) is a flying device, particularly an unmanned aerial vehicle.

3. The calibration method according to any one of the preceding claims, wherein the mobile test device (14) is controllable by a remote control (16).

4. The calibration method of claim 3, wherein the GNSS position of the mobile test device (14) is obtained by decoding signals exchanged between the mobile test device (14) and the remote control (16).

5. The calibration method according to any one of the preceding claims, wherein the GNSS position of the mobile test device (14) is obtained based on telemetry data of the mobile test device (14).

6. The calibration method according to any one of the preceding claims, wherein the error angle is determined for at least two different frequencies of the wireless test signal.

7. The calibration method of claim 6, wherein the error angles obtained at the at least two different frequencies are averaged, thereby obtaining a frequency-averaged error angle.

8. The calibration method according to any one of the preceding claims, wherein the error angle is determined for at least a second position of the mobile test device (14).

9. The calibration method of claim 8, wherein the error angles obtained at the first position and at least at the second position are averaged, thereby obtaining a position-averaged error angle.

10. The calibration method of claim 8 or 9, wherein measurements at different positions are performed via at least two different mobile test devices (14).

11. The calibration method according to any one of claims 6 to 9, wherein the error angle is determined for a plurality of different frequencies and/or for a plurality of different positions until at least one statistical criterion is fulfilled.

12. The calibration method of claim 11, wherein the at least one statistical criterion relates to an error of a DF heading determined by the DF device (12) after calibration.

13. The calibration method according to any one of the preceding claims, wherein the step of obtaining the GNSS position of the mobile test device (14) is performed at least partially in parallel to the steps of generating and transmitting the wireless test signal, receiving the wireless test signal, and determining the DF heading based on the wireless test signal.

14. The calibration method according to any one of the preceding claims, wherein the mobile test device (14) is automatically positioned by a control module (20).

15. A calibration system for calibrating a DF device (12), the calibration system (10) comprising a mobile test device (14) and an analysis module (22), wherein the mobile test device (14) comprises a GNSS module (24) and a transmission module (26), and wherein the calibration system (10) is configured to perform the method according to any one of the preceding claims.
